# EUROPEAN PATENT SPECIFICATION

(11) **EP 1 808 458 B1**
(45) Date of publication and mention of the grant of the patent: **23.02.2011**
(21) Application number: 05805501.3
(22) Date of filing: 02.11.2005
(51) Int. Cl.: C08L 15/00, C08K 3/04, C08K 5/103, C08K 7/06, C09K 3/10, F16J 15/10

(54) **HYDROGENATED NITRILE RUBBER COMPOSITION**
HYDRIERTEN NITRILKAUTSCHUK ENTHALTENDE ZUSAMMENSETZUNG
COMPOSITION DE CAOUTCHOUC AU NITRILE HYDROGENE

(30) Priority: 04.11.2004 JP 2004320319
(43) Date of publication of application: 18.07.2007
(73) Proprietor: Eagle Industry Co., Ltd., Tokyo 105-8587 (JP)
(72) Inventor: KOBAYASHI, Osamu c/o Eagle Industry co., Ltd., Tokyo,1058587 (JP); YAMANAKA, Takuya c/o Eagle Industry co., Ltd., Tokyo,1058587 (JP)
(74) Representative: HOFFMANN EITLE
(86) International application number: PCT/JP2005/020206
(87) International publication number: WO 2006/049207

(56) References cited:
- JP-A- 2001 310 975
- JP-A- 2002 020 545
- JP-A- 2002 080 639
- JP-A- 2002 146 342
- JP-A- 2003 268 182
- JP-A- 2004 217 851

## Description

### TECHNICAL FIELD

The present invention relates to a hydrogenated nitrile rubber composition, and more particularly to a hydrogenated nitrile rubber composition for suitable use as a molding material for seal materials having a distinguished abrasion resistance.

### BACKGROUND ART

As a result of the recent increasing requirements for higher performance of various industrial machines and devices, use circumstances of seal materials provided at the sliding parts of machines and devices have been under severe conditions such as higher temperatures, higher pressure, and higher speeds, so that a long durability such as higher heat resistance and higher pressure resistance, and a longer life has been required for the seal materials, and thus an improvement in the abrasion resistance is indispensable for maintaining to show a long-term seal performance.

To solve such problems, molding materials containing various fillers such as carbon black, silica, carbon fibers, in a higher loadings into a rubber or resin composition have been so far proposed. However, the abrasion resistance has not been fully obtained in many cases, depending on the use conditions of seal materials. Fillers, when contained in a higher loadings, will deteriorate the kneadability. When a large amount of a plasticizer is added thereto to prevent the deterioration, physical properties will be considerably lowered, in the case of plasticizer is extracted into oil, grease, water,
Patent Literature 1 : JP-A-6-220286
Patent Literature 2 : JP-A-11-80481
Patent Literature 3 : JP-A-2002-80639
Patent Literature 4 : JP-A-2002-146342
Patent Literature 5 : JP-A-2002-194156
Patent Literature 6 : JP-A-2002-212361

As to hydrogenated nitrile rubber compositions of higher loadings with carbon fibers, one of the present inventors has so far proposed a hydrogenated nitrile rubber composition, which comprises 100 parts by weight of hydrogenated nitrile rubber having an acrylonitrile content of 30% or more, a polymer Mooney viscosity ML₁₊₄(100°C) of 80 or less (center value) (according to JIS K6395) and an iodine value of 28 or less (center value) and 65- 200 parts by weight of carbon fibers, as a suitable one for a molding material of sealing materials, capable of overcoming problems as to the kneadability or the moldability, and also improving the abrasion resistance, and has recommended using a polyfunctional unsaturated compound such as triallyl (iso)cyanurate, trimethylolpropane tri(meth)acrylate, triallyl trimellitate, butadiene oligomer, in a proportion of 1 to 10 parts by weight, preferably 2 to 8 parts by weight, to 100 parts by weight of hydrogenated nitrile rubber, together with a organic peroxide cross-linking agent at the same time.
Patent Literature 7 : JP-A-2004-217851

The proposed hydrogenated nitrile rubber composition has solved the problem as desired, though actually there remains still a further improvement in the abrasion resistance.

### DISCLOSURE OF THE INVENTION

### PROBLEM TO BE SOLVED BY THE INVENTION

An object of the present invention is to provide a hydrogenated nitrile rubber composition capable of attaining higher loadings of carbon fibers without lowering the kneadability and molding processability, thereby improving the abrasion resistance of cross-linking molded seal materials.

### MEANS FOR SOLVING THE PROBLEM

The object of the present invention can be attained by a hydrogenated nitrile rubber composition, which comprises 100 parts by weight of hydrogenated nitrile rubber having a Mooney viscosity ML₁₊₄ (100°C) of 100 or less, an acrylonitrile content of 30-50%, and an iodine value of 28 or less, 60-250 parts by weight of carbon fibers, and 12-70 parts by weight of a polyfunctional group-based cocross-linking agent having a molecular weight of 150-500, and a viscosity (20°C) of 3-120mPa·s.

### EFFECT OF THE INVENTION

The present hydrogenated nitrile rubber composition can attain higher loadings of carbon fibers without lowering the kneadability and the molding processability by adding a polyfunctional group-based cocross-linking agent having a low viscosity, and can also thereby improve the abrasion resistance of cross-linking molded seal materials. Furthermore, addition of a large amount of the polyfunctional group-based cocross-linking agent can remarkably improve the normal state physical properties, particularly 10% modulus value, an extraction resistance to various fluids in contact with the seal materials, and an abrasion resistance which controls a sealability.

More specifically, seal materials having a high abrasion resistance suitable for sealing a fluid, while sliding along a hard material such as metals, in a relative motion under severe conditions such as higher temperature, higher pressure, higher speeds, can be obtained by cross-linking molding the present hydrogenated nitrile rubber composition, where fluids in contact with the seal materials include, for example, oils such as engine oil, gear oil, transmission oil; water or liquids such as aqueous solutions containing water as the main component, for example, a long-life coolant ; refrigerant gases such as flon, and gases such as natural gas, nitrogen, oxygen,

### BRIEF DESCRIPTION OF DRAWINGS

[Fig. 1] a schematic view showing a lip seal mounting position of an abrasion-evaluating tester.
[Fig. 2] a cross-sectional view of oil seal for abrasion-evaluating of lip seal.
[Fig. 3] a schematic view showing an abrasion depth measurement part at the tip end of a lip seal.

### DESCRIPTION OF REFERENCE NUMERALS

- 1: Test piece for abrasion-evaluating test (lip seal)
- 2: Rotary shaft
- 3: Sliding part
- 4: Housing
- 5: Rubber lip
- 6: Spring
- 7: Metallic ring

### BEST MODES FOR CARRYING OUT THE INVENTION

Hydrogenated nitrile rubber for use in the present invention has a Mooney viscosity ML₁₊₄(100°C) of 100 or less, preferably 50- 85 (according to JIS K6395), an acrylonitrile (AN) content of 30-50%, an iodine value of 0-28g/100g. When the Mooney viscosity is over 100, kneading of a large amount of carbon fibers will be hard to conduct, resulting in molding failure, and even if kneaded, flow failure will occur at the time of molding, resulting in failure in molding of products in a desired shape. Various AN contents can be selected, depending on the desired sealing, but an AN content of less than 30% will considerably increase a gas permeability, resulting in failure in functioning as a gas shielding material. An iodine value of more than 28 will deteriorate the heat resistance.

Carbon fibers for use in the present invention include, for example, PAN-based carbon fibers, pitch-based carbon fibers, rayon-based carbon fibers, which generally are 1 to 20 µm, preferably 5 to 15 *µ*m in fiber diameter, and 0.03 to 1mm, preferably 50 to 500 *µ*m in fiber length. The carbon fibers having such properties can be used in a proportion of 60 to 250 parts by weight, preferably 60 to 200 parts by weight, to 100 parts by weight of hydrogenated nitrile rubber. In a proportion of less than 60 parts by weight, no satisfactory abrasion resistance will be obtained, whereas in a proportion of more than about 250 parts by weight the kneadability or molding processability will be deteriorated at the time of adding other carbon-based filler and the resulting seal materials will have no practical use at the time of adding other carbon-based filler.

Fillers other than carbon fibers include, for example, carbon black, graphite, and can be used together with carbon fibers. Any carbon black of e.g. SRF, GPF, FEF, HAF, IISAF, ISAF, SAF, so long as can improve the abrasion resistance, can be used in a proportion of 30- 150 parts by weight to 100 parts by weight of hydrogenated nitrile rubber. Graphite can be used in a proportion of 0-60 parts by weight, preferably 10 to 60 parts by weight, to 100 parts by weight of hydrogenated nitrile rubber. The abrasion resistance can be further improved by simultaneous use of graphite, but sum total proportion of fillers including carbon fibers is set to 90 to 350 parts by weight, preferably 120 to 300 parts by weight, to 100 parts by weight of hydrogenated nitrile rubber. In a proportion of less than 90 parts by weight of the fillers, no satisfactory abrasion resistance will be obtained, whereas in a proportion of more than 350 parts by weight the kneadability and molding processability will be deteriorated.

To provide a seal material having an abrasion resistance suitable for sealing a fluid under severe conditions such as higher temperature, higher pressure, and higher speed, it is necessary that the normal state physical properties will not be lowered at elevated temperatures due to heat generation by sliding. From this point of view, it is selected to use hydrogenated nitrile rubber, and add carbon fibers and other fillers thereto to improve the abrasion resistance. Furthermore, it is added a liquid polyfunctional group-based cocross-linking agent thereto to overcome the deterioration of kneadability due to higher loadings of carbon fibers, and also to enable the carbon fiber fillers in a higher loadings. That is, a liquid polyfunctional group-based cocross-linking agent is a liquid having a low viscosity at the time of kneading and molding processing, which can lower the viscosity of the composition, and can attain higher loadings of the fillers without deteriorating the kneadability, and also can be cross-linked at the time of rubber cross-linking, thereby improving the reinforcing effect and the extraction resistance to various fluids in contact with the seal materials at the same time.

Polyfunctional group-based cocross-linking agent for use in the present invention includes, for example, a bifunctional group-based cocross-linking agent such as ethylene glycol di(meth)acrylate, triethylene glycol di(meth)acrylate, 1,3-butylene glycol di(meth)acrylate, 1,6-hexanediol di(meth)acrylate, and a trifunctional group-based cocross-linking agent such as trimethylolpropane tri(meth)acrylate, triallyl (iso)cyanurate, which can be used alone or in mixture thereof. The term "(meth)acrylate" means either acrylate or methacrylate, and the term "(iso)cyanurate" likewise means either cyanurate or isocyanurate. Among these polyfunctional group-based cocross-linking agents, those which have a molecular weight of 150 to 500, and a viscosity (20°C; as measured by B type viscosimeter) of 3 to 120mPa · s, showing a liquid state at the ordinary temperature, can be used in a proportion of 12-70 parts by weight, preferably 12-50 parts by weight, to 100 parts by weight of hydrogenated nitrile rubber. In a proportion of less than 12 parts by weight, neither improvements of kneadability or molding processability in case of using higher loadings of carbon fibers or reinforcing effect in case of using carbon fibers of higher loadings, nor improvements of extraction resistance to various fluids can be attained, whereas in a proportion of more than 70 parts by weight wrapping around rolls will be lowered due to bleed generation, resulting in deterioration of the kneadability.

A liquid oligomer such as liquid polybutadiene oligomer, can be used as a polyfunctional group-based cocross-linking agent in a proportion of not more than 10 parts by weight, preferably 3- 6 parts by weight, to 100 parts by weight of hydrogenated nitrile rubber. The liquid polybutadiene oligomer has a high viscosity, for example, 15,000 to 35,000mPa·s (20°C) in the case of JSR product B 3000 as used in the following Examples and Comparative Examples, and thus it fails to act as an afore-mentioned low viscosity polyfunctional group-based cocross-linking agent, enabling higher loadings of fillers without lowering the kneadability and the moldability, though it can act as a cocross-linking agent.

The present hydrogenated nitrile rubber composition comprising the afore-mentioned essential components can be generally peroxide cross-linked with an organic peroxide. Organic peroxide for use in the present invention includes, for example, di-t-butyl peroxide, dicumyl peroxide, t-butylcumyl peroxide, 1,1-di(t-butylperoxy)-3,3,5-trimethylsiloxane, 2,5-dimethyl-2,5-di(t-butylperoxy) hexane, 2,5-dimethyl-2,5-di(t-butylperoxy) hexine-3, 1,3-di(benzoylperoxy) hexane, t-butylperoxybenzoate, t-butylperoxy isopropyl carbonate, n-butyl-4,4' -di(t-butylperoxy) valerate, , and can be used in a proportion of 1 to 10 parts by weight, preferably 2 to 8 parts by weight, to 100 parts by weight of hydrogenated nitrile rubber.

The present composition can be further admixed, if necessary, with a processing aid, an acid acceptor such as divalent metal oxide or hydroxide, hydrotalcite, an antioxidant, a plasticizer, besides the afore-mentioned components, and kneaded by the ordinary kneading method using a kneader, a Banbury mixer, rolls, and the kneaded composition can be cross-linking molded into desired shapes by primary cross-linking at 160° to 220°C for 3 to 10 minutes using a compression molding machine, an injection molding machine, and if necessary, by secondary cross-linking at 150° to 200°C for 1 to 30 hours. In the case of molding as a seal material, the resulting seal material shows a good abrasion resistance, even if used as a seal material in sliding contact with a rotating shaft under the afore-mentioned severe conditions for a long time, and thus can fully show a desired sealing performance.

### EXAMPLES

The present invention will be described in detail below, referring to Examples.

### EXAMPLE 1

| | Parts by weight |
|---|---|
| Hydrogenated NBR (Nippon Zeon product, Zetpol 2000; | 100 |
| AN content: 36.2% ; Mooney viscosity ML₁₊₄(100°C) : | |
| 85 ; iodine value : 7 or less) | |
| SRF carbon black | 100 |
| Carbon fibers (Osaka Gas Chemical product, pitch-based carbon fibers ; fiber diameter : 10 µm ; fiber length : 0.06mm) | 150 |
| Graphite (Nichiden Carbon product, AO) | 20 |
| Antioxidant (Uniroyal product, #445) | 3 |
| Organic peroxide (NOF Corp. product, percumyl D) | 5 |
| Trimethylolpropane trimethacrylate (trifunctional group-based cocross-linking agent) (Mitsubishi Rayon product, Acryester TMP ; molecular weight: 338.41 ; viscosity (20°C) : 57.0mPa · s) | 30 |
| Liquid butadiene oligomer (JSR product, B 3000) | 5 |

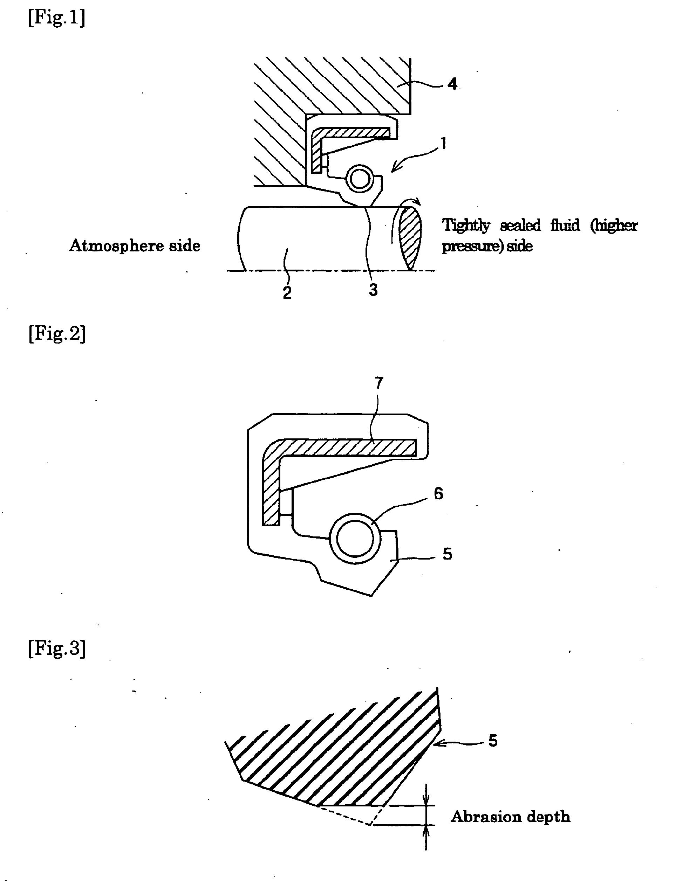

The foregoing components were kneaded through a 3L kneader and 10-inch rolls, and then vulcanization molded into sheets, 2mm in thickness, using a compression molding machine under conditions of 180°C for 6 minutes. The sheets were then subjected to measurement or evaluation of the following test items.
Kneadability : evaluated by state of bagging occurrence at the time of kneading through 10-inch rolls, where bagging non-occurrence was evaluated as "O". , bleed generation by "Δ", and bagging occurrence as " × "
Moldability : evaluated by flowability at the time of molding of 2mm-thickness sheets, where good flowability was evaluated as "O" , and poor flowability (failure to mold) as " × "
Normal state physical properties : owing to small elongation at break, 10% modulus was measured according to JIS K6251 (corresponding to ISO 37)
Lubricating oil resistance : dipped into lubricating oil to measure percent weight of extract according to JIS K6258 (corresponding to ISO 1817)
Abrasion evaluation : shaft lip seals (inner diameter : 12mm) were subjected to a shaft revolution test, using two kinds of fluids to be sealed, i.e. engine oil (turbine oil VG 32) and water (ion-exchanged water), under conditions of peripheral speed : 5 m/sec. fluid pressure : 5MPa, fluid temperature : 150°C and testing time : 10 hours to measure lip part abrasion depth and leaked fluid weight (sealability) (see Figs. 1 to 3)

### EXAMPLE 2.

In Example 1, the amount of trimethylolpropane trimethacrylate was changed to 15 parts by weight, and 15 parts by weight of triethylene glycol dimethacrylate (Mitsubishi Rayon product, Acryester 3ED ; molecular weight : 286.33 ; viscosity (20°C) : 10.2mPa · s) was additionally used as a bifunctional group-based cocross-linking agent.

### EXAMPLE 3.

In Example 1, the same amount of triethylene glycol dimethacrylate (Acryester 3ED) was used in place of trimethylolpropane trimethacrylate.

### COMPARATIVE EXAMPLE 1

In Example 1, no trimethylolpropane trimethacrylate was used.

### COMPARATIVE EXAMPLE 2.

In Example 1, the amount of trimethylolpropane trimethacrylate was changed to 8 parts by weight.

### COMPARATIVE EXAMPLE 3.

In Example 1, the amount of carbon fibers was changed to 45 parts by weight.

### COMPARATIVE EXAMPLE 4.

In Example 1, the same amount of dioctyl phthalate was used in place of trimethylolpropane trimethacrylate.

Results of measurement or evaluation in the foregoing Examples and Comparative Examples are shown in the following Table. In Comparative Example 1, the sign "-" shows that the evaluation was not made due to molding failure. It can be concluded from the results give in Table that:
(1) Addition of a large amount of polyfunctional group-based cocross-linking agent enables higher loadings of carbon fibers without deteriorating the kneadability and the molding processability,
(2) Increase in the amount of added carbon fibers enables the abrasion resistance of seal materials, and
(3) Addition of polyfunctional group-based cocross-linking agent can improve 10% modulus and the lubricating oil resistance, the abrasion resistance remarkably.

**Table**

| Measurement | Example No. | | | Comp. Ex. No. | | | |
|---|---|---|---|---|---|---|---|
| Evaluation item | 1 | 2 | 3 | 1 | 2 | 3 | 4 |
| Kneadability | ○ | ○ | ○ | × | Δ | ○ | Δ |
| Moldability | ○ | ○ | ○ | × | ○ | ○ | ○ |
| 10% modulus (MPa) | 30 | 20 | 13 | - | 12 | 13 | 9 |
| Lubricating oil | | | | | | | |
| resistance (%) | 0.5 | 0.7 | 1.1 | - | 0.6 | 1.0 | 7 |
| Abrasion evaluation | | | | | | | |
| Abrasion depth | | | | | | | |
| Engine oil (mm) | 0.02 | 0.05 | 0.09 | - | 0.18 | 0.40 | 0.29 |
| Water (mm) | 0.05 | 0.10 | 0.19 | - | 0.30 | 0.62 | 0.40 |
| Amount of leaked fluid | | | | | | | |
| Engine oil (g) | 0.010 | 0.008 | 0.011 | - | 0.080 | 0.18 | 0.14 |
| Water (g) | 0.015 | 0.010 | 0.019 | - | 0.011 | 0.20 | 0.16 |

## Claims

1. A hydrogenated nitrile rubber composition, which comprises 100 parts by weight of hydrogenated nitrile rubber having a Mooney viscosity ML₁₊₄(100°C) of 100 or less, an acrylonitrile content of 30-50%, and an iodine value of 28 or less, 60-250 parts by weight of carbon fibers, and 12-70 parts by weight of a polyfunctional group-based cocross-linking agent having a molecular weight of 150-500, and a viscosity (20°C) of 3-120mPa · s.

2. A hydrogenated nitrile rubber composition according to Claim 1, wherein the hydrogenated nitrile rubber has a Mooney viscosity ML₁₊₄-(100°C) of 50-85.

3. A hydrogenated nitrile rubber composition according to Claim 1, wherein 30-150 parts by weight of carbon black is further contained.

4. A hydrogenated nitrile rubber composition according to Claim 3, wherein sum total of the fillers is 90-350 parts by weight.

5. A hydrogenated nitrile rubber composition according to Claim 1, wherein 60 parts by weight or less of graphite is further contained.

6. A hydrogenated nitrile rubber composition according to Claim 5, wherein sum total of the fillers is 90-350 parts by weight.

7. A hydrogenated nitrile rubber composition according to Claim 3, wherein 60 parts by weight or less of graphite is further contained.

8. A hydrogenated nitrile rubber composition according to Claim 7, wherein sum total of the fillers is 90-350 parts by weight.

9. A hydrogenated nitrile rubber composition according to Claim 1, for use as a molding material for seal materials.

10. A hydrogenated nitrile rubber composition according to Claim 3, for use as a molding material for seal materials.

11. A hydrogenated nitrile rubber composition according to Claim 5, for use as a molding material for seal materials.

12. A hydrogenated nitrile rubber composition according to Claim 7, for use as a molding material for seal materials.

13. A seal material cross-linking molded from a hydrogenated nitrile rubber composition according to Claim 9.

14. A seal material cross-linking molded from a hydrogenated nitrile rubber composition according to Claim 10.

15. A seal material cross-linking molded from a hydrogenated nitrile rubber composition according to Claim 11.

16. A seal material cross-linking molded from a hydrogenated nitrile rubber composition according to Claim 12.

17. A seal material according to Claim 13, for use to seal a fluid, while sliding along a metal in relative motion.

18. A seal material according to Claim 14, for use to seal a fluid, while sliding along a metal in relative motion.

19. A seal material according to Claim 15, for use to seal a fluid, while sliding along a metal in relative motion.

20. A seal material according to Claim 16, for use to seal a fluid, while sliding along a metal in relative motion.

## Patentansprüche

1. Hydrierte Nitrilkautschukzusammensetzung, umfassend 100 Gew.-Teile eines hydrierten Nitrilkautschuks mit einer Mooney-Viskosität ML₁₊₄-(100°C) von 100 oder weniger, einem Acrylnitrilgehalt von 30 bis 50 % und einer Jodzahl von 28 oder weniger, 60 bis 250 Gew.-Teile Kohlefasern und 12 bis 70 Gew.-Teile eines auf polyfunktionalen Gruppen basierenden Co-Quervernetzungsmittels mit einem Molekulargewicht von 150 bis 500 und einer Viskosität (20°C) von 3 bis 120 mPa·s.

2. Hydrierte Nitrilkautschukzusammensetzung gemäß Anspruch 1, wobei der hydrierte Nitrilkautschuk eine Mooney-Viskosität ML₁₊₄-(100°C) von 50 bis 85 hat.

3. Hydrierte Nitrilkautschukzusammensetzung gemäß Anspruch 1, wobei ferner 30 bis 150 Gew.-Teile Ruß (carbon black) enthalten sind.

4. Hydrierte Nitrilkautschukzusammensetzung gemäß Anspruch 3, wobei die Gesamtsumme der Füllstoffe 90 bis 350 Gew.-Teile beträgt.

5. Hydrierte Nitrilkautschukzusammensetzung gemäß Anspruch 1, wobei ferner 60 Gew.-Teile oder weniger Graphit enthalten sind.

6. Hydrierte Nitrilkautschukzusammensetzung gemäß Anspruch 5, wobei die Gesamtsumme der Füllstoffe 90 bis 350 Gew.-Teile beträgt.

7. Hydrierte Nitrilkautschukzusammensetzung gemäß Anspruch 3, wobei ferner 60 Gew.-Teile oder weniger Graphit enthalten sind.

8. Hydrierte Nitrilkautschukzusammensetzung gemäß Anspruch 7, wobei die Gesamtsumme der Füllstoffe 90 bis 350 Gew.-Teile beträgt.

9. Hydrierte Nitrilkautschukzusammensetzung gemäß Anspruch 1 zur Verwendung als Formmasse für Dichtungsmaterialien.

10. Hydrierte Nitrilkautschukzusammensetzung gemäß Anspruch 3 zur Verwendung als Formmasse für Dichtungsmaterialien.

11. Hydrierte Nitrilkautschukzusammensetzung gemäß Anspruch 5 zur Verwendung als Formmasse für Dichtungsmaterialien.

12. Hydrierte Nitrilkautschukzusammensetzung gemäß Anspruch 7 zur Verwendung als Formmasse für Dichtungsmaterialien.

13. Dichtungsmaterial, geformt durch Quervernetzen aus einer hydrierten Nitrilkautschukzusammensetzung gemäß Anspruch 9.

14. Dichtungsmaterial, geformt durch Quervernetzen aus einer hydrierten Nitrilkautschukzusammensetzung gemäß Anspruch 10.

15. Dichtungsmaterial, geformt durch Quervernetzen aus einer hydrierten Nitrilkautschukzusammensetzung gemäß Anspruch 11.

16. Dichtungsmaterial, geformt durch Quervernetzen aus einer hydrierten Nitrilkautschukzusammensetzung gemäß Anspruch 12.

17. Dichtungsmaterial gemäß Anspruch 13 zur Verwendung zum Abdichten eines Fluids, während es an einem Metall in relativer Bewegung entlang gleitet.

18. Dichtungsmaterial gemäß Anspruch 14 zur Verwendung zum Abdichten eines Fluids, während es an einem Metall in relativer Bewegung entlang gleitet.

19. Dichtungsmaterial gemäß Anspruch 15 zur Verwendung zum Abdichten eines Fluids, während es an einem Metall in relativer Bewegung entlang gleitet.

20. Dichtungsmaterial gemäß Anspruch 16 zur Verwendung zum Abdichten eines Fluids, während es an einem Metall in relativer Bewegung entlang gleitet.

## Revendications

1. Composition de caoutchouc nitrile hydrogéné, qui comprend 100 parties en poids de caoutchouc nitrile hydrogéné ayant une viscosité Mooney ML₁₊₄(100 °C) de 100 ou moins, une teneur en acrylonitrile de 30 à 50 %, et un indice d'iode de 28 ou moins, 60 à 250 parties en poids de fibres de carbone, et 12 à 70 parties en poids d'un agent de co-réticulation à base de groupe polyfonctionnel ayant un poids moléculaire de 150 à 500, et une viscosité (20 °C) de 3 à 120 mPa·s.

2. Composition de caoutchouc nitrile hydrogéné selon la revendication 1, dans laquelle le caoutchouc nitrile hydrogéné a une viscosité Mooney ML₁₊₄(100°C) de 50 à 85.

3. Composition de caoutchouc nitrile hydrogéné selon la revendication 1, dans laquelle 30 à 150 parties en poids de noir de carbone sont en outre contenues.

4. Composition de caoutchouc nitrile hydrogéné selon la revendication 3, dans laquelle la somme totale des agents de remplissage est de 90 à 350 parties en poids.

5. Composition de caoutchouc nitrile hydrogéné selon la revendication 1, dans laquelle 60 parties en poids ou moins de graphite sont en outre contenues.

6. Composition de caoutchouc nitrile hydrogéné selon la revendication 5, dans laquelle la somme totale des agents de remplissage est de 90 à 350 parties en poids.

7. Composition de caoutchouc nitrile hydrogéné selon la revendication 3, dans laquelle 60 parties en poids ou moins de graphite sont en outre contenues.

8. Composition de caoutchouc nitrile hydrogéné selon la revendication 7, dans laquelle la somme totale des agents de remplissage est de 90 à 350 parties en poids.

9. Composition de caoutchouc nitrile hydrogéné selon la revendication 1, pour utilisation en tant que matière de moulage pour des matières de joint.

10. Composition de caoutchouc nitrile hydrogéné selon la revendication 3, pour utilisation en tant que matière de moulage pour des matières de joint.

11. Composition de caoutchouc nitrile hydrogéné selon la revendication 5, pour utilisation en tant que matière de moulage pour des matières de joint.

12. Composition de caoutchouc nitrile hydrogéné selon la revendication 7, pour utilisation en tant que matière de moulage pour des matières de joint.

13. Réticulation de matière de joint moulée à partir d'une composition de caoutchouc nitrile hydrogéné selon la revendication 9.

14. Réticulation de matière de joint moulée à partir d'une composition de caoutchouc nitrile hydrogéné selon la revendication 10.

15. Réticulation de matière de joint moulée à partir d'une composition de caoutchouc nitrile hydrogéné selon la revendication 11.

16. Réticulation de matière de joint moulée à partir d'une composition de caoutchouc nitrile hydrogéné selon la revendication 12.

17. Matière de joint selon la revendication 13, pour l'utilisation pour sceller un fluide, tout en coulissant le long d'un métal dans un mouvement relatif.

18. Matière de joint selon la revendication 14, pour l'utilisation pour sceller un fluide, tout en coulissant le long d'un métal dans un mouvement relatif.

19. Matière de joint selon la revendication 15, pour l'utilisation pour sceller un fluide, tout en coulissant le long d'un métal dans un mouvement relatif.

20. Matière de joint selon la revendication 16, pour l'utilisation pour sceller un fluide, tout en coulissant le long d'un métal dans un mouvement relatif.
